# EUROPEAN PATENT APPLICATION

(11) **EP 4 593 182 A1**
(43) Date of publication of application: **30.07.2025**
(21) Application number: 23915601.1
(22) Date of filing: 07.09.2023
(51) Int. Cl.: H01M 50/342

(54) **EXPLOSION-PROOF VALVE FOR BATTERY, AND BATTERY**

(30) Priority: 09.01.2023 CN 202320061476 U
(71) Applicant: Hefei Gotion High-Tech Power Energy Co., Ltd., Hefei, Anhui 230012 (CN)
(72) Inventor: MIN, Yuanyuan, Hefei, Anhui 230012 (CN); JU, Linrun, Hefei, Anhui 230012 (CN); ZHANG, Hongli, Hefei, Anhui 230012 (CN); LI, Xinfeng, Hefei, Anhui 230012 (CN); XIN, Weiwei, Hefei, Anhui 230012 (CN); LIANG, Mengtian, Hefei, Anhui 230012 (CN); YANG, Gang, Hefei, Anhui 230012 (CN); LIANG, Chenchen, Hefei, Anhui 230012 (CN)
(74) Representative: karo IP
(86) International application number: PCT/CN2023/117456
(87) International publication number: WO 2024/148843

(57) **Abstract**

The present invention discloses an explosion-proof valve of a battery and a battery, belonging to the technical field of energy storage devices. The explosion-proof valve is an integrally formed disk structure, and comprises, from the outside to the inside, a welding section, a rupture section, and a reinforcement section connected together, a closed rupture score line being arranged on the rupture section, characterized in that: several reinforcement ribs are arranged on the reinforcement section, two ends of the reinforcement ribs being connected to the rupture score line, and a thickness of the reinforcement ribs being greater than a thickness of the rupture score line. A battery installed with the aforementioned explosion-proof valve has an explosion-proof valve activation pressure reaching 0.65-0.95 MPa.

## Description

### Technical field

The present invention relates to the technical field of energy storage devices, and more particularly to an explosion-proof valve of a battery and a battery.

### Background

The power battery cover disk has high-temperature resistance, high insulation, high sealing performance, and good safety performance. Since lithium batteries may generate high-temperature and high-pressure gases during use, if these gases cannot be discharged outside the lithium battery, an explosion and fire may occur, leading to serious safety accidents. Therefore, battery cover disk manufacturers have specifically designed explosion-proof devices on the cover disk. When the internal pressure of the battery cell becomes excessive, the explosion-proof device will automatically open to release pressure, as a precaution against explosions.

Lithium batteries mainly adopt methods such as scoring and welding explosion-proof membranes as explosion-proof devices. When the battery heats up, the internal gas expands, and the pressure increases to a certain level, causing the score lines or explosion-proof membranes to break, crack, or detach, releasing gas to relieve pressure, thereby preventing battery explosions. However, achieving full structural consistency in lithium battery explosion-proof devices is relatively difficult. Additionally, these explosion-proof devices have high activation pressure values for gas release, which means that under abnormal battery conditions, they cannot immediately relieve pressure, leading to lithium battery explosions.

The applicant has been dedicated to the research of battery cell explosion-proof disks, and on November 1, 2022, published a Chinese patent application: "Lithium Explosion-Proof Valve of Battery," with the patent application number 202210965481.4. This explosion-proof valve disk comprises a welding section, a rupture section, and a reinforcement section. The rupture section has a first score line, and the reinforcement section has a second score line. The depth of the second score line is less than that of the first score line. The distance from the end of the second score line to the first score line is X, where X is greater than zero. The reinforcement rib does not connect with the score line of the rupture area. Under the premise of ensuring the activation pressure of the explosion-proof disk, the separation between the reinforcement rib and the score line weakens the restriction of the reinforcement rib on the deformation of the explosion-proof valve body, reducing the deformation of the valve body. This ensures that the score line of the explosion-proof disk retains sufficient residual thickness, improving the safety performance of the battery cell in long-term use and addressing the leakage issue of the explosion-proof valve. However, after the first score line of the explosion-proof valve disk ruptures, the detached fragments may fall into the battery pack, causing a short circuit, and the amount of deformation of the explosion-proof disk under activation pressure still requires further improvement.

There are also structural improvements to explosion-proof valves in existing technologies. For example, Chinese application number 202010679715.X, published on November 10, 2020, discloses a power explosion-proof valve structure of a battery and its processing process. In this design, annular closed reinforcement ribs are arranged on both the inner and outer sides of the explosion-proof score line: a first reinforcement rib and a second reinforcement rib, while a safety portion is reserved for the explosion-proof score line. However, the deformation intensity of this explosion-proof valve under activation pressure still requires further improvement.

In summary, improving the explosion-proof valve disk presently remains an urgent research issue.

### Summary

### 1. Technical issues to be solved

The present invention provides a battery explosion-proof valve, with the purpose of improving the strength of the current explosion-proof valve under the influence of the activation pressure, and further proposes a battery with the battery explosion-proof valve.

### 2. Technical solutions

In order to solve the aforementioned problems, the technical solution adopted by the invention is as follows:
An explosion-proof valve of a battery, which is an integrally formed disk structure, and comprises, from the outside to the inside, a welding section, a rupture section, and a reinforcement section connected together, a closed rupture score line being arranged on the rupture section; several reinforcement ribs are arranged on the reinforcement section, two ends of the reinforcement ribs being connected to the rupture score line, and a thickness of the reinforcement ribs being greater than a thickness of the rupture score line. The thickness of the rupture score line here refers to the residual wall thickness at the rupture score line. Wherein, the closed rupture score line is preferably racetrack-shaped.

In a possible implementation of the present invention, a connection portion is arranged at a junction of the welding section and the rupture section, a thickness of the connection portion being greater than or equal to the thickness of the reinforcement rib.

In a possible implementation of the present invention, a width of the connection portion is 0.1-2.5 mm.

In a possible implementation of the present invention, for explosion-proof valves of larger dimensions, having only one reinforcement rib would lead to uneven force distribution on the reinforcement surface. Therefore, in the present invention, for the 31 *20 model explosion-proof valve, two reinforcement ribs are designed in parallel. The reinforcement ribs evenly divide the reinforcement section of the explosion-proof valve, ensuring more uniform force distribution when gas is generated due to internal pressure in the battery cell. It is preferable that the reinforcement ribs be perpendicular to the racetrack-shaped rupture score line.

In a possible implementation of the present invention, at least one end of the reinforcement ribs penetrates through the rupture score line and connects to the welding section. The reinforcement ribs connect the reinforcement section to the rupture score line and extend to the welding section, enhancing the strength of both the reinforcement section and the welding section.

In a possible implementation of the present invention, at least one end of the reinforcement ribs penetrates through the rupture score line and extends to the connection portion, with a length of the reinforcement ribs extending into the connection portion being less than or equal to the width of the connection portion.

In a possible implementation of the present invention, the rupture score line is an annular closed structure arranged with a safety portion thereon. A thickness of the safety portion is greater than the thickness of the reinforcement rib but less than a thickness of the welding section. The thickness of the welding section refers to a thickness of a non-connection portion area of the welding section. The function of the safety portion is that when the internal pressure of the battery cell reaches the activation pressure of the explosion-proof valve, the explosion-proof valve tears open from the rupture score line into a semi-open state, preventing it from completely detaching, which would result in metal debris falling into the battery pack and causing a short circuit, potentially leading to a fire. Meanwhile, the wall thickness of the safety portion is reduced relative to the welding section, providing a similar function to the reinforcement rib in suppressing welding deformation of the explosion-proof disk.

In a possible implementation of the present invention, the safety portion is arranged at a central portion of a line connecting the ends of two adjacent reinforcement ribs.

In a possible implementation of the present invention, a length of the safety portion is less than a distance between the ends of two adjacent reinforcement ribs on the same side.

In a possible implementation of the present invention, a connection portion is arranged at a junction of the welding section and the rupture section, a thickness of the connection portion being greater than or equal to the thickness of the reinforcement rib. The connection portion serves to enhance the strength of the explosion-proof valve and has a suppressing effect on the welding deformation of the explosion-proof valve, that is, under the action of internal pressure in the battery cell, the degree of deformation at the welding portion is reduced, which is beneficial to increasing the activation pressure of the explosion-proof valve.

In a possible implementation of the present invention, the reinforcement section is arched in the middle, meaning that the back surface of the reinforcement section has a curved surface. By increasing the curvature, a simulation was conducted to compare the stress distribution at the rupture score line of an explosion-proof valve with a flat back versus one with an arched back under a certain load. Under the same air pressure, the stress at the rupture score line of the explosion-proof valve with a flat back surface was greater than that of the explosion-proof valve with an arched back surface. Thus, an explosion-proof valve without a curved design at the rupture score line is more prone to failure, posing a safety risk to the battery cell. The simulation conditions are: constraining the periphery of the explosion-proof disk, and applying uniform upward air pressure beneath the explosion-proof disk to simulate the effect of gas generation inside the battery cell on the explosion-proof disk.

It is specifically noted that the processing process of the connection portion, rupture score line, safety portion, and reinforcement ribs described above is completed in one stamping process, which significantly improves the stability of the activation pressure. When the internal air pressure of the battery cell reaches the activation point, the rupture score line fails first, tearing at the rupture score line while the safety portion remains intact, thereby preventing the explosion-proof disk from completely detaching and forming metal debris, which could pose a safety hazard to the battery pack.

In a possible implementation of the present invention, the arching height of the reinforcement section is 0.001-3 mm, preferably 0.3-0.7 mm.

In a possible implementation of the present invention, the explosion-proof valve is preferably an elliptical substrate, the thickness of the welding portion is 1.5-6 mm, the size of the explosion-proof valve in the length direction is 2-100 mm, and the size of the explosion-proof valve in the width direction is 2-80 mm, such that the explosion-proof valve is a 31*20 model.

In a possible implementation of the present invention, the size of the explosion-proof valve in the length direction is 31 mm, and the size of the explosion-proof valve in the width direction is 20 mm.

A battery is equipped with the aforementioned explosion-proof valve of a battery, and the explosion-proof valve has an activation pressure reaching 0.65-0.95 MPa.

### 3. Advantageous results

Compared with the prior art, the beneficial effects of the present invention are manifested in:
(1) In the explosion-proof valve structure of the present invention, the rupture score line thereon and the reinforcement ribs are connected, which can increase the activation pressure of the explosion-proof valve of the battery cell. The uniform distribution of the rupture score line and the reinforcement ribs ensures that the battery cell has a higher design pressure, meeting the activation pressure requirements during actual use. For example, when applied to the 31*20 model explosion-proof valve, the activation pressure of the explosion-proof valve of the battery cell can reach 0.889 MPa;
(2) In the explosion-proof valve structure of the present invention, reinforcement ribs are arranged on the front surface of the reinforcement section, while the back surface of the reinforcement section is arched outward, with a preferred arching height of 0.001-3 mm. Compared with a flat back surface at an air pressure of 0.68 MPa, the Mises stress of the reinforcement section with the arched back surface structure is lower at 120.286 MPa, while the Mises stress of the reinforcement section with the flat back surface is 124.633 MPa. This indicates that the combination of the reinforcement section with the arched back surface structure and the reinforcement rib structure on the front surface in the present disclosure has the advantage of increasing the activation pressure value of the explosion-proof valve.

### Brief description of the drawings

FIG. 1 is a structural schematic diagram of an explosion-proof valve of the present invention;
FIG. 2 is a structural schematic diagram of a front surface of the explosion-proof valve of the present invention;
FIG. 3 is a structural schematic diagram of a back surface of the explosion-proof valve of the present invention;
FIG. 4 is a sectional view of the explosion-proof valve of the present invention;
FIG. 5 is a front sectional view of the explosion-proof valve of the present invention.

In the figures:
1, welding section; 2, rupture section; 3, reinforcement section; 11, connection portion; 21, rupture score line; 22, safety portion; 31, reinforcement ribs.

### Detailed description of embodiments

The following will clearly and completely describe the technical solutions in the embodiments of the present invention in conjunction with the accompanying drawings of the embodiments of the present invention. Of course, the described embodiments are merely a portion of the embodiments of the present invention, and not all of the embodiments. Based on the embodiments of the present invention, all other embodiments obtained by those of ordinary skill in the art without making creative efforts shall fall within the scope of protection of the present invention.

An explosion-proof valve of a battery of the present invention is an integrally formed disk structure, which sequentially includes a welding section 1, a rupture section 2, and a reinforcement section 3 from the outside to the inside.

At a junction of the welding section 1 and the rupture section 2, a connection portion 11 is arranged, and a thickness of the connection portion 11 is greater than or equal to a thickness of a reinforcement rib 31. The connection portion 11 serves to enhance the strength of the explosion-proof valve and has a suppressing effect on the welding deformation of the explosion-proof valve, that is, under the action of internal pressure in the battery cell, the degree of deformation at the welding portion is reduced, which is beneficial to increasing the activation pressure of the explosion-proof valve.

A closed rupture score line 21 is arranged on the rupture section 2, and the shape of the rupture score line 21 is not limited to racetrack-shaped. A person skilled in the art can select and design a suitable shape for the rupture score line 21 according to the shape of the explosion-proof valve. **In** the following embodiments, the rupture score line 21 is selected to be racetrack-shaped. Furthermore, in an improved design, a safety portion 22 is arranged on the rupture score line 21, where a thickness of the safety portion 22 is greater than the thickness of the reinforcement rib 31 but less than a thickness of the explosion-proof valve. The function of the safety portion is that when the internal pressure of the battery cell reaches the activation pressure of the explosion-proof valve, the explosion-proof valve tears at the rupture score line and reaches a semi-open state, preventing it from completely detaching and forming metal debris that falls into the battery pack, causing a short circuit and triggering a fire. At the same time, a wall thickness of the safety portion is reduced, which has a similar effect to a reinforcement rib, playing a role in suppressing welding deformation of the explosion-proof valve disk.

Several reinforcement ribs 31 are arranged on the reinforcement section 3. In the following embodiments, two reinforcement ribs 31 are selected, and the two reinforcement ribs 31 are parallel to each other and perpendicular to the racetrack-shaped rupture score line 21. Both ends of the reinforcement ribs 31 are connected to the rupture score line 21. Additionally, to enhance the strength of the reinforcement section and the welding section, in the following embodiments, one end of the reinforcement ribs 31 penetrates through the rupture score line 21 and connects to the welding section 1.

It should be noted that the following are the preferred dimensions: the thickness of the explosion-proof valve substrate is 1.5-6 mm, and the elliptical explosion-proof valve has a length of 2-100 mm and a width of 2-80 mm. The thickness of the connection portion 11 is 0.01-1 mm; the thickness of the rupture score line 21 is 0.05-0.9 mm; the thickness of the safety portion 22 is 0.01-1 mm, and the length is 2-40 mm; the thickness of the reinforcement rib 31 is 0.01-1 mm, and the center distance between the two reinforcement ribs 31 is 5-50 mm.

The above explosion-proof valve represents the preferred structure and dimensions. The advantages of the explosion-proof valve of the present invention will be further described through the following embodiments, with each embodiment being based on a 31 *20 model explosion-proof valve, where the thickness of the reinforcement section (excluding the reinforcement ribs) is 0.36 mm.

### Embodiment 1

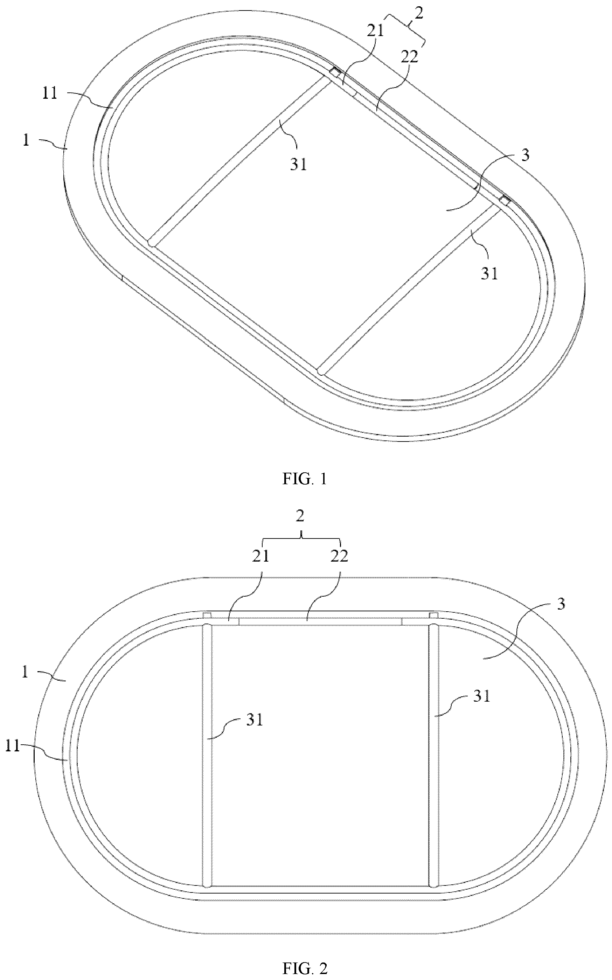

The explosion-proof valve of a battery of the present embodiment, as shown in FIG. 1 and FIG. 2, sequentially comprises a welding section 1, a rupture section 2, and a reinforcement section 3 from outside to inside. A surface of the explosion-proof valve that contacts the air: a connection portion 11 with reduced wall thickness is arranged at a junction of the welding section 1 and the rupture section 2; a racetrack-shaped rupture score line 21 is arranged on the rupture section 2, and one section of the rupture score line 21 has an increased thickness to form a safety portion 22; the reinforcement section 3 is evenly divided by two reinforcement ribs perpendicular to the rupture score line 21, and the reinforcement ribs 31 are connected to the rupture score line 21, with one end penetrating the rupture score line 21 and extending to the connection portion 11, which enhances the strength of the reinforcement section and the welding section. Wherein, the thickness of the rupture score line 21 < the thickness of the reinforcement rib 31 ≤ the thickness of the connection portion 11 < the thickness of the safety portion 22. It is noteworthy that in the present embodiment, a back surface of the explosion-proof valve facing the battery cell is flat, and the residual thickness of the rupture score line 21 is 0.1211 mm.

### Embodiment 2

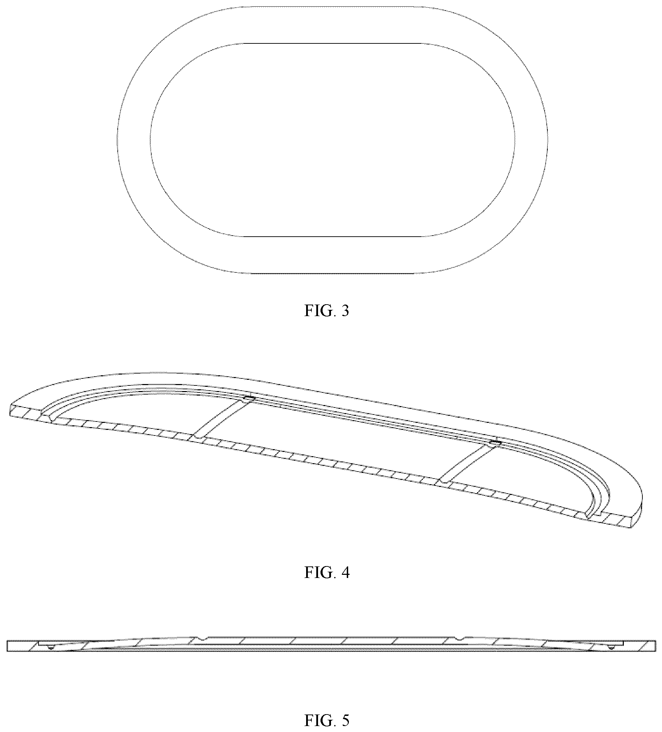

The structure of a front side of the explosion-proof valve of a battery in the present embodiment is the same as in Embodiment 1, with the difference being that, as shown in FIG. 3 to FIG. 5, the back surface of the explosion-proof valve arches out by 0.36 mm, and the residual thickness of the rupture score line 21 is 0.1211 mm.

### Embodiment 3

The structure of a front side of the explosion-proof valve of a battery in the present embodiment is the same as in Embodiment 1, with the difference being that, as shown in FIG. 3 to FIG. 5, the back surface of the explosion-proof valve arches out by 0.36 mm, and the residual thickness of the rupture score line 21 is 0.11 mm.

### Embodiment 4

The structure of a front side of the explosion-proof valve of a battery in the present embodiment is the same as in Embodiment 1, with the difference being that, as shown in FIG. 3 to FIG. 5, the back surface of the explosion-proof valve arches out by 0.66 mm, and the residual thickness of the rupture score line 21 is 0.1211 mm.

### Embodiment 5

The structure of a front side of the explosion-proof valve of a battery in the present embodiment is the same as in Embodiment 1, with the difference being that, as shown in FIG. 3 to FIG. 5, the back surface of the explosion-proof valve arches out by 0.01 mm, and the residual thickness of the rupture score line 21 is 0.1211 mm.

Simulation conditions in Table 1 are: constraining the periphery of the explosion-proof disk, and applying uniform upward air pressure beneath the explosion-proof disk to simulate the effect of gas generation inside the battery cell on the explosion-proof disk.

As seen from Table 1, comparing the structures under simulation conditions to the test results, the change in trends are relatively consistent; as shown in Embodiments 1 and 2, the arching of the back surface is conducive to increasing the activation pressure of the explosion-proof valve; as shown in Embodiments 2 and 3, an increase of 0.01 mm in the residual thickness at the rupture score line has little effect on the activation pressure of the explosion-proof valve. From the Mises stress data under 0.68 MPa air pressure, it can be observed that under the same air pressure, the stress at the rupture score line 21 of the explosion-proof valve without the arched back surface is greater than that of the explosion-proof valve with the arched back surface, which indicates that the activation pressure of the explosion-proof valve with the arched back surface is greater than that of the explosion-proof valve with a flat back surface.

**Table 1: Explosion-proof valve performance in Embodiments 1-5**

| **Embodiment** | **Analysis type** | **Simulation condition values** | | **Laboratory values** | **Mises stress at 0.68 MPa air pressure/ MPa** |
|---|---|---|---|---|---|
| | | **Displacement/mm** | **Activation pressure/ MPa** | **Activation pressure/ MPa** | |
| **Embodiment 1** | Rupture score line residual thickness 0.1211 mm | 0.95 | 0.66 | 0.889 | 124.633 |
| | Back surface flat | | | | |
| **Embodiment 2** | Rupture score line residual thickness 0.1211 mm | 0.786 | 0.79 | 0.902 | 123.954 |
| | Back surface arched 0.36 mm | | | | |
| **Embodiment 3** | Rupture score line residual thickness 0.11 mm | 0.794 | 0.78 | 0.88 | 124.214 |
| | Back surface arched 0.36 mm | | | | |
| **Embodiment 4** | Rupture score line residual thickness 0.1211 mm | 0.689 | 0.89 | 0.921 | 120.286 |
| | Back surface arched 0.66 mm | | | | |
| **Embodiment 5** | Rupture score line residual thickness 0.1211 mm | 0.935 | 0.68 | 0.901 | 124.525 |
| | Back surface arched 0.01 mm | | | | |

The above provides a schematic description of the present invention and its embodiments, and the description is non-restrictive. The illustrations in the accompanying drawings represent only one of the embodiments of the present invention, and the actual structure is not limited thereto. Therefore, if an ordinary person skilled in the art is inspired by this and, without departing from the inventive purpose of the present invention, designs a structurally similar solution or embodiment without creative effort, it shall fall within the scope of protection of the present invention.

## Claims

1. An explosion-proof valve of a battery, which is an integrally formed disk structure, and comprises, from the outside to the inside, a welding section (1), a rupture section (2), and a reinforcement section (3) connected together, a closed rupture score line (21) being arranged on the rupture section (2), **characterized in that**: several reinforcement ribs (31) are arranged on the reinforcement section (3), two ends of the reinforcement ribs (31) being connected to the rupture score line (21), and a thickness of the reinforcement ribs (31) being greater than a thickness of the rupture score line (21).

2. The explosion-proof valve of a battery according to claim 1, **characterized in that**: a connection portion (11) is arranged at a junction of the welding section (1) and the rupture section (2), a thickness of the connection portion (11) being greater than or equal to the thickness of the reinforcement rib (31).

3. The explosion-proof valve of a battery according to claim 2, **characterized in that**: a width of the connection portion (11) is 0.1-2.5 mm.

4. The explosion-proof valve of a battery according to claim 2, **characterized in that**: two reinforcement ribs (31) are arranged parallel to each other.

5. The explosion-proof valve of a battery according to claim 2, **characterized in that**: at least one end of the reinforcement ribs (31) penetrates the rupture score line (21) and is connected to the welding section (1).

6. The explosion-proof valve of a battery according to claim 5, **characterized in that**: at least one end of the reinforcement ribs (31) penetrates the rupture score line (21) and extends to the connection portion (11), and a length of the reinforcement ribs (31) extending at the connection portion (11) is less than or equal to the width of the connection portion (11).

7. The explosion-proof valve of a battery according to claim 2, **characterized in that**: the rupture score line (21) is an annular closed structure, a safety portion (22) is arranged on the rupture score line (21), a thickness of the safety portion (22) is greater than the thickness of the reinforcement rib (31), and the thickness of the safety portion (22) is less than a thickness of the welding section (1).

8. The explosion-proof valve of a battery according to claim 2, **characterized in that**: the safety portion (22) is arranged at a central portion of a line connecting the ends of two adjacent reinforcement ribs (31).

9. The explosion-proof valve of a battery according to claim 8, **characterized in that**: a length of the safety portion (22) is less than a distance between the ends of two adjacent reinforcement ribs (31) on the same side.

10. The explosion-proof valve of a battery according to any one of claims 1 to 9, **characterized in that**: the reinforcement section (3) is arched.

11. The explosion-proof valve of a battery according to claim 10, **characterized in that**: a height of the arch of the reinforcement section (3) is 0.001-3 mm.

12. The explosion-proof valve of a battery according to claim 11, **characterized in that**: the explosion-proof valve is preferably an elliptical substrate, the thickness of the welding portion (1) is 1.5-6 mm, the size of the explosion-proof valve in the length direction is 2-100 mm, and the size of the explosion-proof valve in the width direction is 2-80 mm.

13. The explosion-proof valve of a battery according to claim 12, **characterized in that**: the size of the explosion-proof valve in the length direction is 31 mm, and the size of the explosion-proof valve in the width direction is 20 mm.

14. A battery, **characterized in that**: the battery is equipped with the explosion-proof valve of a battery according to any one of claims 1 to 13.
